Europäisches Patentamt

European Patent Office

Office européen des brevets

(11) Veröffentlichungsnummer: **0 312 958 B1**

(19)

(12) **EUROPÄISCHE PATENTSCHRIFT**

(45) Veröffentlichungstag der Patentschrift: **21.04.93**

(51) Int. Cl.5: **B01D 53/34**

(21) Anmeldenummer: **88117246.4**

(22) Anmeldetag: **17.10.88**

(54) **Verfahren zur mikrobiologischen Umwandlung von schwefelhaltigen Schadstoffen in Abgasen.**

(30) Priorität: **19.10.87 AT 2752/87**

(43) Veröffentlichungstag der Anmeldung:
**26.04.89 Patentblatt 89/17**

(45) Bekanntmachung des Hinweises auf die
Patenterteilung:
**21.04.93 Patentblatt 93/16**

(84) Benannte Vertragsstaaten:
**BE CH DE ES FR GB GR IT LI LU NL SE**

(56) Entgegenhaltungen:
**FR-A- 2 331 367**

**PATENT ABSTRACTS OF JAPAN, Band 7, Nr.
11 (C-145)(1156), 18 janvier 1983; & JP-A-57
170 181 (NISHIHARA KANKIYOU EISEI KEN-
KYUSHO K.K.) 20.10.1982**

(73) Patentinhaber: **WAAGNER-BIRO AKTIENGE-
SELLSCHAFT**
**Stadlauer-Strasse 54 Postfach 11**
**A-1221 Wien(AT)**

Patentinhaber: **GLANZSTOFF AUSTRIA AK-
TIENGESELLSCHAFT**
**Herzogenburger Strasse 69**
**A-3100 St. Pölten(AT)**

(72) Erfinder: **Berzaczy, Ludwig**
**Sobieskigasse 42**
**A-1090 Wien(AT)**
Erfinder: **Etzenberger, Walter**
**Mühlweg 60a**
**A-3100 St. Pölten(AT)**
Erfinder: **Kloimstein, Lothar, Dipl.-Ing. Dr.**
**Matthias Corvinus Strasse 8**
**A-3100 St. Pölten(AT)**
Erfinder: **Niedermayer, Erwin, Dipl.-Ing.**
**Wagramerstrasse 93**
**A-1220 Wien(AT)**
Erfinder: **Schmidt, Alfred, Prof. Dipl.-Ing. Dr.**
**Pacassistrasse 29**
**A-1130 Wien(AT)**
Erfinder: **Windsperger, Andreas, Dipl.-Ing. Dr.**
**Jasmingasse 450**
**A-3034 Maria-Anzbach(AT)**

(74) Vertreter: **Wallner, Gerhard, Dipl.-Ing.**
**c/o Waagner-Biro Aktiengesellschaft Patentabteilung Stadlauer-Strasse 54 Postfach 11**
**A-1221 Wien (AT)**

## Beschreibung

Die Erfindung betrifft ein Verfahren zur mikrobiologischen Umwandlung von schwefelhaltigen Schadstoffen, vorzugsweise von H2S, CS2 und/oder COS, oder auch von Thioalkoholen, Thioäthern und Thiophenen aus Abgasen, in verdünnte Schwefelsäure und deren Ausschleusung, insbesondere aus Abgasen einer Kunstfaserfabrikation, bei dem das Abgas durch einen Füllkörper-Reaktor geleitet wird, dessen Füllkörper mit immobilisierten Mikroorganismen aus der Familie Thiobacillaceae, wie vorzugsweise Thiobacillus thiooxidans, besetzt sind, und eine Waschflüssigkeit, welche die von den Mikroorganismen durch Oxidation produzierte Schwefelsäure enthält, im Kreislauf durch den Füllkörperreaktor geführt und einem Abschlammbehälter zugeführt wird, wobei die oxidierten Schadstoffe neutralisiert und die entstehenden Salze teilweise ausgeschleust werden.

Es ist bekannt, mit den oben genannten Schadstoffen versetzte Luft als Verbrennungsluft in Dampferzeugern zu entsorgen oder sie als Belüftungsmedium in Abwasserkläranlagen zu verwenden. Da aber der jeweilige Sauerstoffbedarf ein mengenbegrenzendes Kriterium darstellt und in den meisten Fällen die zu entsorgende ungereinigte Abluft bzw. Abgas in weitaus größeren Mengen anfällt, ist die vollständige Entsorgung dieser übelriechenden Abgase mit relativ geringer Schadgaskonzentration ein ungelöstes Problem.

Bekannt sind ferner Adsorptionsverfahren zur Abscheidung von $H_2S$ und $CS_2$ aus Viskose-Abgasen. So kann $H_2S$ an mit KJ imprägnierter, grobporiger Aktivkohle adsorbiert werden, während $CS_2$ an einer engporigen Aktivkohle adsorbiert wird. Die Regeneration der S-beladenen Aktivkohle erfolgt mit flüssigem $CS_2$; $H_2SO_4$ wird mit Wasser ausgewaschen; $CS_2$ wird mit Wasserdampf desorbiert.

Bei einem anderen Verfahren wird zur Oxidation von $H_2S$ schwermetallarme Kohle verwendet. In geringen Mengen sich bildende $H_2SO_4$ wird mit $NH_3$ neutralisiert.

Die beiden Verfahren können die verfahrensstufen $H_2S$-Oxidation und $CS_2$-Adsorption in einem oder bei höheren Konzentrationen auch in zwei getrennten Adsorbern vornehmen.

Weiters sind Kombinationsverfahren bestehend aus einer Alkaliwäsche für die $H_2S$-Entfernung und Aktivkohleadsorption für $CS_2$ in Anwendung.

Die FR-A-2 331 367 offenbart ein ein- oder zweistufiges biologisches Verfahren zur biologischen Umwandlung von schwefelhältigen Schadgasen aus Abgasen in Schwefel und Schwefelsäure.

Auch die letztgenannten Verfahren sind für die wirtschaftliche Reinigung großer Abgasströme mit geringen Schadgaskonzentrationen nicht geeignet.

Die Erfindung hat es sich zur Aufgabe gestellt, die eingangs erwähnten Schadgaskomponenten auch in geringerer Konzentration unschädlich zu machen, und die entstehenden Verbindungen entweder verkaufsfähig oder verwendungsfähig zu machen oder zumindest weitgehend zu inertisieren.

Die Erfindung ist dadurch gekennzeichnet, daß der aus dem Abschlammbehälter ausgetragenen Flüssigkeit durch Zugabe von Ca(OH)2 und Auskristallisation von CaSO4 Sulfationen im festen Zustand entzogen werden und die verbleibende Flüssigkeit, zusammen mit Frischwasser bzw. gereinigtem Abwasser in den Kreislauf rückgeführt wird. Wesentliche Ausgestaltungen der Erfindung sind in den Unteransprüchen 2 bis 4 angegeben.

Die Erfindung wird anhand eines Beispiels und einer schematischen Verfahrenszeichnung erläutert.

Bei der Fabrikation von Stapelfaser, Zellglas, Zellulosedärmen oder Endlosgarn fällt ein Abgas von ca. 50.000 bis 700.000 $m^3$/t Erzeugnis an, welches je nach Verfahrensstufe unterschiedliche Konzentrationen an $H_2S$, $CS_2$ und/oder COS (Starkgasstrom, Schwachgasstrom) enthält. Starkgase können im allgemeinen zur wirtschaftlichen Wiedergewinnung der Schwefelkomponenten herangezogen werden. Schwachgase stellen auf jeden Fall Geruchsprobleme dar und enthalten vorzugsweise bis zu 3.000 ppm $CS_2$, 1.000 ppm $H_2S$ und/oder COS.

Ein Teil dieses Abgases wird in einem Versuchsreaktor mit einem Durchmesser von 30 cm und einem nutzbaren Inhalt von 115 l gereinigt. Dieser Reaktor ist gefüllt mit Füllkörpern, die mit Bakterien besetzt sind, welche aus dem Abwasserschlamm der betrieblichen Kläranlage stammen und im wesentlichen Bakterien der Familie Thiobacillaceae darstellen. Diese Bakterien wurden nach einer Adaptionszeit von etwa einer Woche an Füllkörpern immobilisiert. Das zu reinigende Abgas durchströmt den Reaktor von unten nach oben, wobei im Gegenstrom dazu Wasser in der Größenordnung von 20 bis 100 l pro Stunde zum Abtransport der gebildeten Stoffwechselprodukte gepumpt wird. Dieses Wasser wird im Kreislauf geführt, wobei vor Eintritt in den Reaktor im kontinuierlichen Betrieb eine pH-Regelung auf einen pH-Wert von 3 bis 10 erfolgt. Beim Durchtritt durch die Kolonne sinkt der pH-Wert bei den später genannten Beispielen um etwa 1 bis 5 pH-Einheiten ab. Zum Abtransport der gebildeten Stoffwechselprodukte wird etwa 1 l Flüssigkeit pro Stunde aus dem Kreislauf ausgeschleust und durch Frischwasser ersetzt. Gebildetes Sulfat kann aus dem ausgeschleusten Strom mit Kalkwasser gefällt werden, wobei eine teilweise Rückgewinnung der bei der Neutralisierung eingesetzten Lauge erfolgt. Um die Ansprüche der Organismen nach Spurenelementen und anorganischen Stoffen, wie Phosphor und Stickstoff, zu befriedigen, wurde eine entsprechende Nährstofflösung bzw. Salze von Spurenelementen dem Frischwasser beigemischt, wie sie zur Anzucht von Thiobacillaceae verwendet wird. Die Umwandlung der schwefelhältigen Komponenten durch die Bakterien erfolgt nach nachstehenden Gleichungen

$$H_2S + 2O_2 \rightarrow H_2SO_4$$
$$CS_2 + 4O_2 + 2H_2O \rightarrow 2H_2SO_4 + CO_2$$
$$COS + 2O_2 + H_2O \rightarrow H_2SO_4 + CO_2$$

In den nachstehenden Tabellen ist die Abscheidung von $H_2S$ bzw. $CS_2$ in Abhängigkeit von der durchgesetzten Gasmenge angegeben:

1) Abscheidung von $H_2S$

| Gasstrom $m^3/h$ | Konz.Rohgas Vppm | Konz.Reingas Vppm | Abscheidung % |
|---|---|---|---|
| 10 | 20 | nicht 100 nachweisbar | |
| 15 | 20 | " " | 100 |
| 20 | 20 | Spuren | 100 |
| 30 | 20 | 1 | 95 |
| 40 | 20 | 4 | 80 |

2) Abscheidung von $CS_2$

| Gasstrom $m^3/h$ | Konz.Rohgas Vppm | Konz.Reingas Vppm | Abscheidung % |
|---|---|---|---|
| 10 | 80 | nicht 100 nachweisbar | |
| 15 | 90 | 7 | 92 |
| 20 | 90 | 8 | 91 |
| 30 | 80 | 19 | 78 |
| 40 | 80 | 42 | 42 |

Die aus dem Reaktor abfließenden Stoffwechselprodukte werden durch Zusatz von Lauge (Natron- oder Kalilauge) neutralisiert, so daß im wesentlichen lösliche Salze entstehenden, die im Kreislauf geführt werden. Um eine Anreicherung der Salze in der Kreislaufflüssigkeit zu verhindern, wird im Rahmen des Ionenzuwachses im Reaktor eine entsprechende Menge an Salzlösung aus dem Neutralisationsgefäß abgezogen, und diese Flüssigkeitsmenge durch Frischwasser ersetzt. Da die Natron- und/oder Kalilauge relativ teuer ist, kann ein Teil derselben durch Kalkwasserzugabe rückgewonnen werden, wobei etwa nachstehende Gleichung eingehalten wird:

$$Na_2SO_4 + Ca(OH)_2 \rightarrow 2NaOH + CaSO_4$$

Das $CaSO_4$ fällt aus bzw. kann eingedickt werden, während der Überstand relativ sulfatarm ist und in diesem Sinn über die biologische Kläranlage abgeleitet oder auch für interne Kreisläufe rückgeführt werden kann.

In der angeschlossenen Figur ist ein Verfahrensschaltbild dargestellt.

In der Chemischen Fabrik 1 zur Erzeugung von Stapelfaser, Zellglas, Zellulosedärmen oder Endlosgarn fällt neben dem Abgas auch ein schwefelhältiges Abwasser an, welches in der Kläranlage 2 biologisch gereinigt wird. Das Reinwasser, soweit es nicht für interne Kreise verwendet werden kann, wird in den Vorfluter 3 abgeführt. In der biologischen Kläranlage bilden sich Schwefelbakterien, die an handelsüblichen Füllkörpern immobilisiert werden. Diese Füllkörper werden in einen Füllkörperreaktor 4 eingebracht und dort ständig feucht gehalten, wozu sich naturgemäß das nährstoffreiche Reinwasser mit Schwefelbakterien der Kläranlage 2 besonders eignet. Durch den Reaktor wird im Gegenstrom zu der Flüssigkeit das in der Fabrik 1 anfallende Abgas gemäß Leitung 5 zu der Befeuchtigungsflüssigkeit der Füllkörper eingebracht und durch die Füllkörperschicht hindurchgeleitet, wobei die Bakterien die schwefelhältigen Teile des Abgases binden und als Stoffwechselprodukt Schwefelsäure bilden, die durch die abtropfende Flüssigkeit gelöst wird und sich im Sumpf 6 des Reaktors 4 sammelt. Diese säurehältige Lösung wird in einem weiteren Reaktor 7 mit Lauge, insbesondere Natron- oder Kalilauge, versetzt, so daß sich ein Salz bildet, welches dem dritten Reaktor 8 zugeführt wird, in welchem die löslichen Salze durch Kalkmilchzugabe in im wesentlichen unlösliche Kristalle umgewandelt werden, die aus dem Verfahren ausgeschleust in einer Deponie 9 gelagert bzw. verwertet werden können. Der sulfatarme Überstand kann über die biologische Kläranlage in den Vorfluter 3 abgegeben werden. Die im Reaktor 8 anfallende Flüssigkeit ist im wesentlichen gelöste Natron- oder Kalilauge und wird zur Vermeidung von Chemikalienverlusten in den Reaktor 7 rückgeführt. Die Trennung der beiden Reaktoren 7 und 8 hat im wesentlichen den Sinn, daß eine Konzentration der Lösung und andererseits auch eine Trennung des bakteriologischen Kreislaufes vom Gipskreislauf erreicht wird, so daß Kristallbildungen im Reaktor 7 bewußt ausgeschlossen werden.

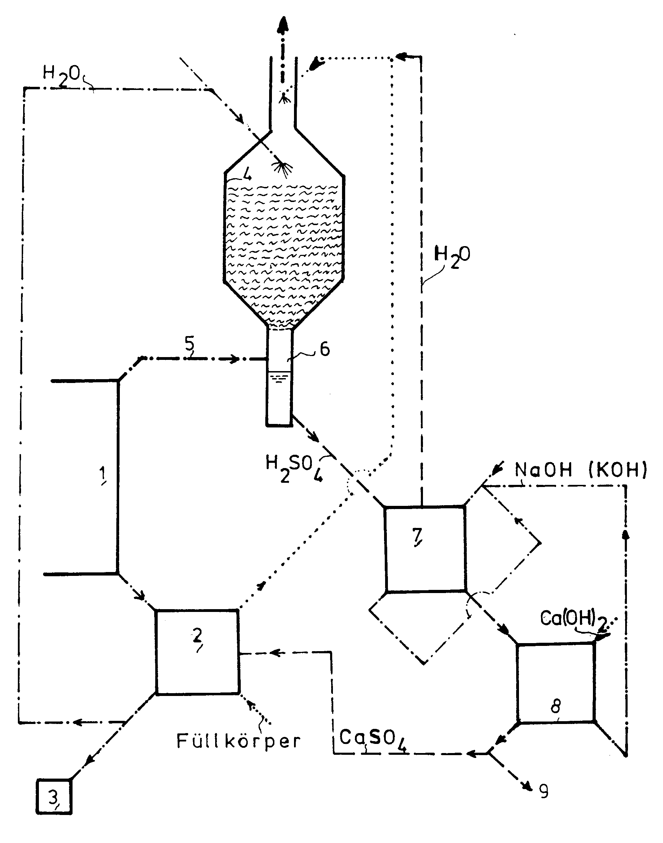

**Patentansprüche**

1. Verfahren zur mikrobiologischen Umwandlung von schwefelhaltigen Schadstoffen, vorzugsweise von $H_2S$, $CS_2$ und/oder COS, oder auch von Thioalkoholen, Thioäthern und Thiophenen aus Abgasen, in verdünnte Schwefelsäure und deren Ausschleusung, insbesondere aus Abgasen einer Kunstfaserfabrikation (1), bei dem das Abgas durch einen Füllkörper-Reaktor (4) geleitet wird, dessen ständig feucht gehaltene Füllkörper mit immobilisierten Mikroorganismen aus der Familie Thiobacillaceae, wie vorzugsweise Thiobacillus thiooxidans, besetzt sind, und eine Waschflüssigkeit, welche die von den Mikroorganismen durch Oxidation produzierte Schwefelsäure enthält, im Kreislauf durch den Füllkörperreaktor (4) geführt und einem Abschlammbehälter (7,8) zugeführt wird, wobei die oxidierten Schadstoffe neutralisiert und die entstehenden Salze teilweise ausgeschleust werden, dadurch gekennzeichnet, daß der aus dem Abschlämmbehälter (7,8) ausgetragenen neutralisierten Flüssigkeit durch Zugabe von Ca-$(OH)_2$ und Auskristallisation von $CaSO_4$ Sulfationen im festen Zustand entzogen werden und die verbleibende Flüssigkeit, zusammen mit Frischwasser bzw. gereinigtem Abwasser in den Kreislauf rückgeführt wird.

2. Verfahren nach Anspruch 1, dadurch gekennzeichnet, daß die im Kreislauf geführte Waschflüssigkeit aus rezirkulierter Flüssigkeit besteht, der mit salzartigen Spurenelementen versetztes Frischwasser bzw. gereinigtes Abwasser zugesetzt wird, und daß der im Füllkörperreaktor (4) zwischen ein- und abfließender Flüssigkeit gegebene Ionenzuwachs durch teilweisen Abzug der Kreislaufflüssigkeit aus dem System ausgeschleust wird, wobei der Verlust an Kreislaufflüssigkeit ersetzt wird und die Lösbarkeitsgrenze für $CaSO_4$ im Füllkörperreaktor (4) eingehalten wird.

3. Verfahren nach Anspruch 2, dadurch gekennzeichnet, daß die aus dem Füllkörperreaktor (4) abfließende Flüssigkeit im Abschlämmbehälter (7) durch Zugabe von NaOH oder KOH neutralisiert wird und

4

anschließend die gelösten Salze durch Ca(OH)$_2$ -Zugabe in unlösliche CaSO$_4$ -Teilchen umgewandelt werden.

**4.** Verfahren nach Anspruch 1, dadurch gekennzeichnet, daß die Füllkörper vor ihrer Verwendung im Füllkörperreaktor (4) in der biologischen Abwasserreinigungsanlage (2) der Kunstfaserfabrik (1) mit deren Schwefelbakterien bei gleichzeitiger Immobilisierung besiedelt werden.

**Claims**

**1.** Process for microbiological conversion of sulfur containing pollutants, preferably H$_2$S, CS$_2$ and/or COS or also thio-alcohols, thioethers and thiophenes in off gases, into diluted sulphuric acid and their discharge, in particular from off gases coming from the synthetic fibres industry (1) leading the off gas through a tower packing reactor (4), the permanently moistened tower packing of which is equipped with immobilized microorganisms from the family of thiobacillaceae such as preferably Thiobacillus thiooxidans and a washing liquid containing the sulphuric acid produced by the microorganisms by means of oxidation, and leading off gas in a circuit through the tower packing reactor (4) and into a sedimentation tank (7,8), whereby the oxidized pollutants are neutralized and the produced salts are partly discharged, characterized in that sulphate ions in solid condition are withdrawn from the discharged neutralized liquid by means of precipitation of CaSO$_4$ and the remaining liquid is recycled to the circuit together with fresh water or purified waste water.

**2.** Process according to claim one characterized in that the washing liquid consists of recycled liquid to which fresh water containing saline trace elements is added and that the ion increase between entering and discharged liquid in the tower packing reactor (4) is discharged by partially drawing the circuit liquid off the system, whereby the loss of circuit liquid is compensated and a solubility limit for CaSo$_4$ in the tower packing reactor (4) is observed.

**3.** Process according to claim 2, characterized in that the liquid drained from the tower packing reactor (4) is neutralized in the sedimentation tank (7) by adding NaOH or KOH and that subsequently the dissolved salts are transformed into insoluble CaSO$_4$ particles by adding Ca(OH)$_2$.

**4.** Process according to claim 1, characterized in that before being used in the tower packing reactor (4), the tower packing is equipped with the sulphur bacteria in the biological waste water purification plant (2) of the synthetic fibres industry (1) and is simultaneously immobilized.

**Revendications**

**1.** Procédé pour la conversion microbiologique de polluants contenant du soufre, de préférence de H$_2$S, CS$_2$ et/ou COS ou aussi de thioalcools, thioéthers et thiophènes dans des gaz d'échappement en acide sulfurique et leur élimination, en particulier dans des gaz d'échappement d'une production de fibres synthétiques (1), dans laquelle les gaz d'échappement sont menés à travers un réacteur à colonne à corps de remplissage (4) dont les corps de remplissage constamment humidifés sont peuplés de micro-organismes immobilisés de la famille de thio-bacillaceae tels que de préférence le thiobacillus thiooxidans et un liquide laveur contenant l'acide sulfurique produit par les micro-organismes par voie d'oxidation est mené en circuit à travers le réacteur à colonne à corps de remplissage (4) et dans un récipient de sédimentation (7,8), les polluants oxydés étant neutralisés et les sels produits étant partiellement déchargés, caractérisé en ce que des ions de sulfate en état solide sont extraits du liquide neutralisé déchargé du récipient de sédimentation (7,8) par addition de Ca(OH)$_2$ et précipitation de CaSO$_4$ et que le liquide restant et recyclé dans le circuit avec l'eau fraîche et l'eau usée purifiée.

**2.** Procédé suivant revendication 1, caractérisé en ce que le liquide de lavage mené en circuit consiste en liquide recirculé auquel est ajouté de l'eau fraîche pourvue d'éléments de trace salins ou de l'eau usée purifiée et que l'augmentation d'ions entre le liquide entrant et sortant du réacteur à colonne à corps de remplissage (4) est déchargé en partiellement enlevant le liquide de circuit du système tout en compensant la perte de liquide de circuit et maintenant la limite de solubilité de CaSO$_4$ dans le réacteur à colonne à corps de remplissage (4).

3.  Procédé suivant revendicaton 2, caractérisé en ce que le liquide déchargé du réacteur à colonne à corps de remplissage (4) est neutralisé dans le récipient de sédimentation (7) en ajoutant du NaOH ou KOH et que les sels dissous sont ensuite transformés en particules de $CaSO_4$ insolubles en ajoutant du $Ca(OH)_2$.

4.  Procédé suivant revendication 1, caractérisé en ce qu'avant leur utilisation dans le réacteur à colonne à corps de remplissage (4) les corps de remplissage sont peuplés des thiobactéries dans l'installation d'épuration biologique des eaux d'égout (2) de l'usine de production de fibres synthétiques (2) tout en les immobilisant.